# FASCICULE DE BREVET EUROPEEN

(11) **EP 2 199 163 B1**
(45) Date de publication et mention de la délivrance du brevet: **08.01.2020**
(21) Numéro de dépôt: 09177056.0
(22) Date de dépôt: 25.11.2009
(51) Int. Cl.: B60T 8/32, B60T 7/04, B60T 13/58, B60T 13/68, B60T 13/74

(54) **SYSTÈME DE SIMULATION DE SENSATION DE FREINAGE ET APPLICATION D'UN TEL SYSTÈME.**
SYSTEM ZUR SIMULIERUNG DES BREMSGEFÜHLS UND ANWENDUNG EINES SOLCHEN SYSTEMS
BRAKING FEEL SIMULATION SYSTEM AND APPLICATION OF SUCH A SYSTEM.

(30) Priorité: 22.12.2008 FR 0807420
(43) Date de publication de la demande: 23.06.2010
(73) Titulaire: Robert Bosch GmbH, 70442 Stuttgart (DE)
(72) Inventeur: Piel, Jean-Marc, 93190, LIVRY GARGAN (FR); Leboube, Christophe, 77680, ROISSY EN BRIE (FR); Marlhe, Nicolas, 95670, MARLY LA VILLE (FR)

(56) Documents cités:
- EP-A- 1 078 833
- EP-A1- 1 634 787
- DE-A1- 19 651 153
- DE-A1-102007 043 592
- GB-A- 2 449 984
- US-A1- 2006 091 726

## Description

L'invention concerne un système de simulation de sensation de freinage à la pédale de frein. Elle est plus particulièrement applicable à un véhicule équipé d'un système de freinage classique dans lequel la pédale de frein agit sur le circuit de freinage hydraulique des roues du véhicule et d'un système de freinage à énergie auxiliaire tel qu'un système de freinage électrique. Elle est notamment applicable aux véhicules à traction hybride tels que les véhicules à traction mixte comportant un moteur à combustion interne et un ou plusieurs moteurs électriques.

Dans la technique, il est connu d'équiper des véhicules de deux systèmes de freinage commandés par le même dispositif de commande (pédale de frein), et agissant sur les roues du véhicule à l'aide de sources d'énergies différentes.

C'est le cas par exemple des véhicules hybrides à traction mixte possédant un moteur de traction à combustion interne et des moteurs de traction électriques. Dans ces véhicules, il est connu d'utiliser les moteurs électriques pour le freinage en les faisant fonctionner en génératrices électriques, le freinage se faisant alors par récupération d'énergie.

Le véhicule comporte donc un système de freinage électrique par récupération d'énergie mais il comporte aussi généralement un système de freinage hydraulique classique en raison du fait que l'effort de freinage du système de freinage électrique est limité et qu'à vitesse réduite, il devient très faible.

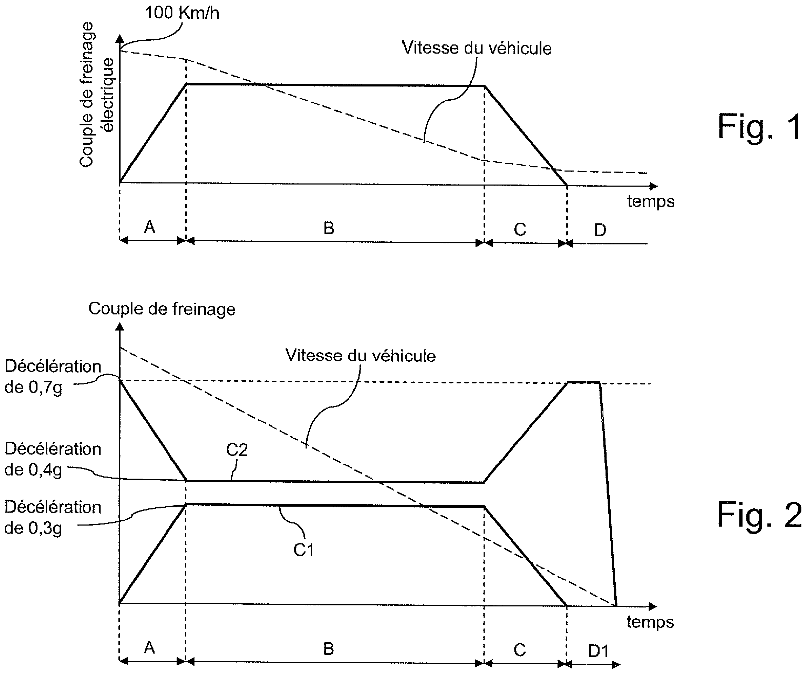

Cependant, le freinage électrique ne donne pas toujours entièrement satisfaction. La figure 1 représente de manière schématique, en trait continu, une courbe de freinage (couple de freinage en fonction du temps) d'un tel système de freinage électrique seul. Sur ce même graphique, on a représenté en pointillés la vitesse du véhicule. Dans une première zone de freinage A, le freinage augmente progressivement jusqu'à atteindre sa pleine efficacité dans une deuxième zone de freinage B, puis lorsque la vitesse du véhicule devient faible, dans une troisième zone C, le couple de freinage diminue, et devient quasi inexistant dans une quatrième zone D. Un tel système de freinage est imparfait parce que dans la zone A le freinage ne devient pas pleinement efficace rapidement et parce que dans les zones C et D le freinage diminue lorsque le véhicule est à faible vitesse. Ce fonctionnement est représenté, sur la figure 1, par la courbe en pointillés.

Pour remédier à cet inconvénient du freinage électrique par récupération d'énergie, on doit prévoir qu'un système de freinage hydraulique apporte un complément de freinage dans les zones A, C et D.

La figure 2 représente des courbes de fonctionnement du système de freinage électrique et du système de freinage hydraulique.

La courbe C1 est la courbe de freinage électrique par récupération d'énergie qui correspond à celle de la figure 1. Si l'on désire obtenir une décélération du véhicule de 0,7g par exemple, et que le système de freinage électrique permet d'obtenir une décélération maximale de 0,3g, il faudra que la courbe du freinage appliquée par le système de freinage hydraulique soit schématiquement celle représentée par la courbe C2. Dans la zone A, le couple de freinage hydraulique permettra dès que possible une décélération de 0,7g puis diminuera jusqu'à ce que le couple de freinage électrique atteigne sa valeur maximale et que la décélération équivalente due à ce couple de freinage électrique soit de 0,3g. De cette façon, à chaque instant, la somme des couples fournis par les systèmes de freinage électrique et hydraulique fournit une décélération de 0,7g. Dans la zone B, le système de freinage hydraulique complète le système de freinage électrique pour obtenir également une décélération de 0,7g. Ensuite, dans la zone C, on a une augmentation du couple de freinage du système hydraulique pour apporter à nouveau un complément de freinage au système de freinage électrique et pour, dans la zone D1, pallier la quasi inexistence de couple de freinage électrique.

Par ailleurs, outre ses temps de réponse, le système de freinage électrique par récupération, peut ne pas répondre tout le temps de la même façon en raison de la charge du circuit de récupération d'énergie qui peut varier. C'est le cas notamment dans le cas où le circuit de récupération comporte essentiellement les batteries du véhicule. Dans ce cas la charge peut varier en fonction de l'état des batteries.

Dans de tels systèmes, un circuit de commande (un calculateur par exemple) doit gérer les fonctionnements des systèmes de freinage. Ce calculateur est sollicité à chaque freinage.

Un organe de commande manuelle telle qu'une pédale de frein actionne le système de freinage de service ou, en cas d'insuffisance ou de défaillance de ce dernier, le freinage de secours.

Avantageusement, le système de freinage classique comporte un maître-cylindre équipé d'au moins un piston primaire et il est commandé par l'organe de commande manuelle (pédale de frein).

Par ailleurs, une vanne de sécurité au moins permet d'isoler le maître-cylindre des freins de roues lorsque le freinage de service fonctionne normalement. Par contre lorsque l'effort de freinage fourni par le système de freinage à énergie auxiliaire (freinage électrique) est insuffisant ou lorsque ce système de freinage est défaillant, cette vanne de sécurité permet de coupler le maître-cylindre à au moins un frein de roue.

Dans de tels systèmes, pour que le conducteur ait une sensation de freinage lorsque le système de freinage à énergie extérieure fonctionne, on prévoit un simulateur de sensation de freinage pour opposer à l'avance de l'organe de commande manuelle (pédale de frein), lors d'un freinage de service à énergie auxiliaire, une réaction reflétant le déroulement du freinage.

Couramment, ce simulateur comprend un piston de simulateur qui coulisse dans une chambre. Ce piston est sollicité d'un côté par l'organe de commande manuelle (directement ou indirectement) et d'un autre côté par un moyen d'application d'une force qui simule l'effort de freinage.

Lors du fonctionnement du système de freinage à énergie auxiliaire, le maître-cylindre est donc isolé des freins de roues et le liquide contenu dans le maître-cylindre ne peut refluer vers ces freins. Grâce au simulateur de sensation, l'organe de commande manuelle reçoit un effort qui s'oppose à l'actionnement de l'organe de commande manuelle et qui simule l'effort de freinage. En principe, ce système de simulation permet de créer une loi de variation de la force à exercer sur l'organe de commande manuelle en fonction de la course. Cela procure au conducteur une sensation semblable à celle qui serait obtenue si la pression de liquide dans les freins de roues résultait directement de la pression provenant du maître-cylindre et de l'effort musculaire sur la pédale de frein.

Dans les systèmes de simulation connus, par exemple du document EP 1 634 787 A1 la loi de variation de la force à exercer sur l'organe de commande manuelle est déterminée principalement par un moyen de rappel élastique, généralement formé par un ressort, et la loi ne peut pas être modifiée de manière simple et rapide ce qui est un inconvénient. De plus, ce moyen de rappel élastique peut avoir des caractéristiques qui varient dans le temps ou selon le type de véhicule.

Le document US 2006/0091726 A1 montre un système de simulation d'après le préambule de la revendication 1.

L'invention a pour objet de remédier à ces inconvénients.

L'invention concerne un système de simulation de sensation de freinage pour installation de freinage de véhicule comprenant un système de freinage hydraulique commandé par l'énergie musculaire du conducteur et un système de freinage auxiliaire électrique par récupération d'énergie, comportant
- une première chambre contenant un fluide de transmission d'effort entre un piston hydraulique entraîné par un organe de commande manuel de freinage et un piston de commande du système de freinage hydraulique,
- la première chambre communiquant sur commande avec une deuxième chambre de simulation par une vanne de simulation dont le taux d'ouverture permet de simuler un effort à la pédale de frein, et
- une vanne de blocage du fonctionnement dudit circuit de freinage hydraulique,
- une unité centrale commandant la vanne de blocage,
- un détecteur de consigne de freinage connecté à l'unité centrale,
- l'unité centrale :
   * commandant la vanne de blocage dans un état de blocage lorsque le système de simulation est actionné,
   * mettant en service le système de freinage hydraulique si le système de freinage électrique est insuffisant pour répondre à la demande de freinage et commander la fermeture partielle ou totale de la vanne de simulation,
   un détecteur de consigne de freinage connecté à l'unité centrale de commande assurant la commande de la vanne de simulation en fonction de la consigne de freinage détectée par le détecteur et du freinage à effectuer par le système hydraulique de freinage.

Avantageusement, l'unité de commande centrale réalise une commande numérique de la vanne de simulation selon un taux de modulation correspondant à la commande de freinage du système de freinage auxiliaire.

Selon une variante de réalisation du système de l'invention, l'unité de commande centrale réalise une commande analogique de la vanne de simulation selon un taux d'ouverture de la vanne de simulation qui correspond à la commande de freinage du système de freinage auxiliaire.

Selon une forme de réalisation avantageuse de l'invention, la première chambre contient un piston de commande du système de freinage hydraulique commandé par énergie musculaire. Le fluide de transmission d'effort est situé dans ladite première chambre entre le piston de commande du système de freinage hydraulique et le piston hydraulique qui est commandé par l'organe de commande manuel de freinage. De plus, le piston de commande porte une tige de commande d'un servomoteur d'assistance au freinage et/ou d'un maître cylindre.

Selon une forme de réalisation préférée de l'invention, la deuxième chambre secondaire de simulation comporte une enceinte qui communique par la vanne de simulation avec la première chambre et qui contient le même type de fluide que cette première chambre, un piston poussé par un dispositif élastique fermant la deuxième chambre sans opposer quasiment d'effort au déplacement du fluide de la première chambre vers la deuxième chambre.

Avantageusement, un détecteur de déplacement de l'organe de commande de freinage manuel fournit un signal de détection de déplacement qui est transmis à l'unité centrale de commande laquelle commande l'ouverture et/ou la fermeture de la vanne de simulation.

L'invention concerne également une application du système de simulation de sensation de freinage, tel que défini précédemment, à un véhicule à traction mixte moteurs électriques et moteur à combustion interne. Le circuit hydraulique de freinage de chaque roue du véhicule destiné à freiner celui-ci est alors équipé d'une vanne de blocage dudit circuit hydraulique.

Les différents objets et caractéristiques de l'invention apparaîtront plus clairement dans la description qui va suivre et dans les figures annexées qui représentent:
- les figures 1 et 2, des courbes de fonctionnement déjà décrites précédemment,
- la figure 3, un exemple de réalisation du système de simulation de freinage selon l'invention,
- la figure 4, un exemple de fonctionnement du système de la figure 3.

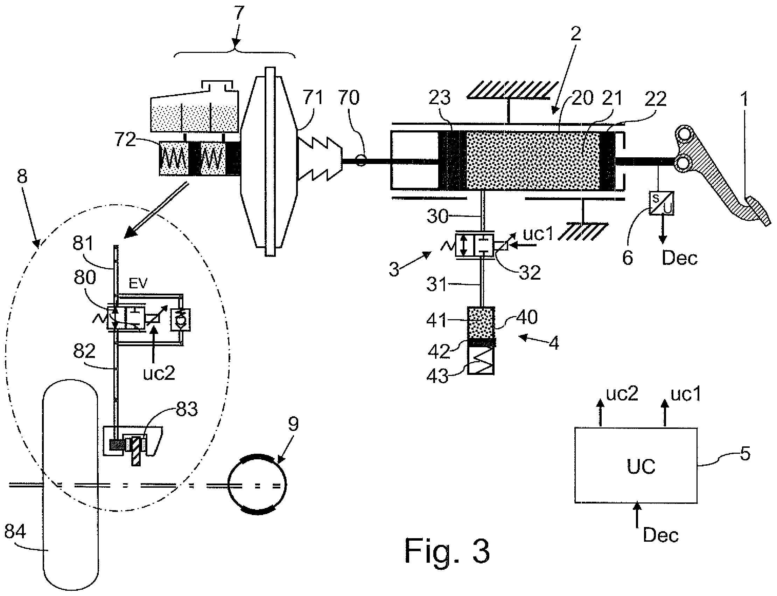

En se reportant à la figure 3, un exemple de réalisation du système de l'invention sera décrit.

A titre d'exemple, ce système sera décrit dans le cadre d'une application à un véhicule à traction mixte possédant un moteur de traction à combustion interne et un ou plusieurs moteurs de traction électriques. Il est connu, dans un tel véhicule d'utiliser les moteurs électriques en génératrices de courant électrique pour freiner le véhicule. L'énergie électrique fournie sert à recharger les batteries du véhicule. Le véhicule est ainsi freiné par récupération de l'énergie pour recharger les batteries. Cependant, la force de freinage peut n'être pas suffisante en cas de freinage d'urgence; elle est également insuffisante à faible vitesse et, de toutes façon elle dépend de l'état de charge des batteries. C'est pourquoi, Un tel véhicule possède alors généralement, en outre, un système de freinage classique tel qu'un système de freinage hydraulique dont l'effort de freinage résulte au moins partiellement de l'effort exercé par le conducteur sur la pédale de frein. Le système de freinage normalement utilisé est le système de freinage électrique par récupération d'énergie, puis en cas de besoin, le système de freinage hydraulique est mis en service. Ces systèmes de freinage sont gérés par une unité de commande centrale qui décide la mise en fonctionnement du système de freinage hydraulique. Ces systèmes sont connus dans la technique et n'ont donc pas besoin d'être décrits.

Lorsque le système de freinage électrique est utilisé, un système de simulation oppose un effort au déplacement de la pédale de frein lorsque le conducteur appuie sur cette pédale de frein. Cela a pour effet de simuler l'effort de freinage à l'intention du conducteur. En outre, la position de la pédale de frein n'est plus nécessairement liée à celle des pistons du maître cylindre de frein.

Selon l'invention, le système de la figure 3 prévoit une première chambre 20 typiquement cylindrique dans laquelle coulisse un premier piston 22 actionné par la pédale de frein 1. Un deuxième piston 23 coulisse également dans la chambre 20 et porte une tige de commande 70 d'un servomoteur d'assistance au freinage 71 et, par suite, entraînant les pistons d'un système de freinage hydraulique 7.

Un dispositif de stockage comportant une deuxième chambre 4 est raccordé à la première chambre 20 par deux canalisations 30 et 31 et par une vanne de simulation 3. Entre les deux pistons 20 et 23 est prévu un fluide qui peut circuler vers le dispositif de stockage selon l'état d'ouverture de la vanne de simulation.

Par ailleurs, des vannes de blocage, telle que la vanne 80 permettent de bloquer le fonctionnement du circuit hydraulique de freinage 7-8. A titre d'exemple, le système de l'invention prévoit une vanne de blocage sur le circuit hydraulique de chaque roue interdisant de transmettre une pression de freinage vers chaque roue.

La figure 3, on ne représente qu'une seule roue 84 et son dispositif de freinage 83. Une vanne de blocage 80 est prévue sur les canalisations 81 et 82 reliant le dispositif de freinage 83 au maître cylindre de frein 72.

Le véhicule étant un véhicule à traction mixte, on a représenté un moteur 9 permettant d'entraîner en rotation la roue 84.

On va maintenant décrire le fonctionnement du système.

Lorsque le conducteur appuie sur la pédale de frein 1, le détecteur 6 détecte une consigne de freinage, par exemple le mouvement de la pédale de frein ou la force exercée sur cette pédale et transmet un signal de détection Dec à une unité centrale de commande 5. Celle-ci commande le fonctionnement du moteur électrique 9 en générateur électrique de manière connue dans la technique.

Simultanément, l'unité centrale de commande 5 transmet un signal de simulation ucl à la vanne de simulation 32 pour commander son ouverture. Les caractéristiques de ce signal sont fonction de la consigne de freinage et de la capacité de freinage par récupération d'énergie. L'ouverture de la vanne 32 est donc fonction du signal uc1. Le conducteur ressent au pied une réaction habituelle correspondant à une consigne de freinage.

Par ailleurs, l'unité centrale de commande 5 transmet un signal de blocage uc2 à la vanne de blocage 80. L'efficacité du circuit hydraulique de freinage est alors limitée, voire bloquée. Les pistons du maître cylindre 72 ne peuvent se déplacer que pour suppléer, si cela est nécessaire, au freinage par récupération d'énergie. De même le fonctionnement du servomoteur d'assistance au freinage est bloqué. La tige de commande 70 ne peut pas se déplacer et interdit le mouvement du piston 23.

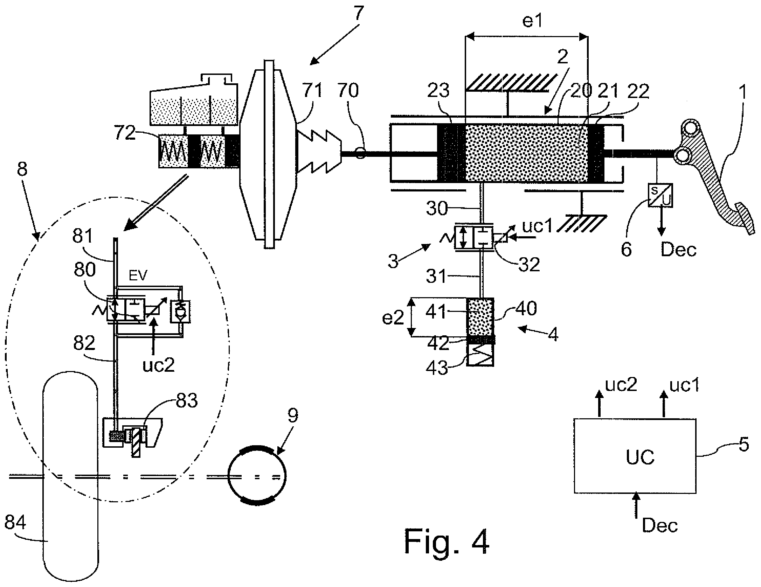

De ce fait, lorsque le conducteur appuie sur la pédale de frein, le piston 22 tend à se déplacer vers la gauche (sur les figures 3 et 4). Le mouvement du piston 23 étant bloqué, le piston 22 pousse le fluide 21 contenu dans la chambre 20 vers la chambre 40. Comme on l'a vu précédemment l'ouverture de la vanne 32 est fonction de la caractéristique du signal ucl et la vanne 32 peut donc limiter le passage du fluide 21 selon le déplacement de la pédale de frein.

Le signal ucl fourni par l'unité centrale de commande 5 peut être un signal numérique (ou impulsionnel) la fréquence de répétition des impulsions étant alors fonction du déplacement de la pédale de frein et de la sensation de pédale que l'on souhaite restituer au conducteur (applicable par paramétrage logiciel).

Avantageusement, on met en oeuvre des vannes de commande à largeur d'impulsions (PWM en terminologie anglo-saxonne).

Par exemple, pour simuler un faible effort de freinage (déplacement instantané de la pédale de frein plus grand), le rapport cyclique du signal ucl sera grand pour obtenir un taux d'ouverture important de la vanne 32.

A l'inverse, pour simuler un effort de freinage important (déplacement instantané plus faible de la pédale de frein), le rapport cyclique du signal ucl sera faible pour obtenir un taux d'ouverture faible de la vanne 32.

Selon une variante de réalisation, le signal ucl fourni par l'unité centrale de commande 5 est un signal analogique. L'amplitude de ce signal détermine l'ouverture plus ou moins importante de la vanne 32 pour opposer un effort plus ou moins important au déplacement de la pédale de frein.

Comme on peut le voir sur la figure 4, l'enfoncement de la pédale de frein a provoqué le déplacement du piston 22 et la distance e1 entre le piston 22 et le piston 23 a été réduite. Une partie du fluide 21 (en fonction du taux d'ouverture de la vanne 32) s'est déplacée vers l'espace 41 de la chambre 40. La longueur e2 et par suite le volume de cette espace 41 ont donc augmenté.

Sur les figures 3 et 4, le dispositif 4 comporte avantageusement un organe de maintien 43 évitant un déplacement libre du piston 42 dans la chambre 40, le dispositif 4 formant un accumulateur hydraulique. Cet organe de maintien n'a pas (ou n'a quasiment pas) de fonction de compression sur le fluide contenu dans la chambre 40, il n'a qu'un rôle de maintien. En tout état de cause, il n'a pas vocation à participer à la sensation pédale, laquelle sera déterminée par le pilotage de la vanne contrôlable.

Le système de l'invention permet de simuler un effort de freinage à la pédale de frein bien que l'effort de freinage appliqué aux roues du véhicule soit fourni par une source d'énergie (freinage électrique) ne résulte pas de l'effort nécessaire à l'enfoncement de la pédale de frein.

Par ailleurs, lorsque l'unité centrale de commande détermine que le système de freinage électrique par récupération d'énergie est insuffisant pour répondre à la demande de freinage du conducteur, l'unité centrale de commande peut décider de mettre en service le système de freinage hydraulique 7-8.

L'unité centrale de commande 5 commande la fermeture partielle ou totale de la vanne de simulation 32. En effet, le système de simulation peut être mis hors service en l'absence de freinage électrique puisque le conducteur perçoit un effort de freinage normal provenant de la mise en service du système de freinage hydraulique.

Un signal uc2 est fourni aux vannes de blocage telles que la vanne 80. Les circuits hydrauliques de freins de roues sont débloqués.

En raison de la fermeture de la vanne de simulation 32, le piston 23 se déplace vers la gauche (sur les figures 3 et 4) sous l'action du déplacement du piston 22 et du fluide 21. La tige de commande 70 commande le fonctionnement du servomoteur d'assistance au freinage 71 et par suite le déplacement des pistons du maître cylindre 72. Les dispositifs de freinage hydraulique 83, typiquement les freins à disque, reçoivent du liquide de frein sous pression.

Dans la description qui précède, pour simplifier, on a considéré que lorsque le freinage électrique est actif, le système de freinage hydraulique est bloqué et inversement. Cependant, sans sortir du cadre de l'invention, on peut également prévoir un fonctionnement limité du système de freinage hydraulique qui permette de compenser une insuffisance de l'effort de freinage du système de freinage électrique.

## Revendications

1. Système de simulation de sensation de freinage pour installation de freinage de véhicule comprenant un système de freinage hydraulique (7, 8) commandé par l'énergie musculaire du conducteur et un système de freinage auxiliaire électrique par récupération d'énergie (9), le système de simulation comprenant une vanne de blocage (80) du fonctionnement du circuit de freinage hydraulique (7, 8), une unité centrale (5) commandant la vanne de blocage et un détecteur (6) de consigne de freinage connecté à l'unité centrale (5),
**caractérisé en ce qu'**il comporte
- une première chambre (20) contenant un fluide (21) de transmission d'effort entre un piston hydraulique (22) entraîné par un organe de commande manuel de freinage (1) et un piston (23) de commande du système de freinage hydraulique (7, 8),
- la première chambre (20) communiquant sur commande avec une deuxième chambre de simulation (4) par une vanne de simulation (3) dont le taux d'ouverture permet de simuler un effort à la pédale de frein et
- l'unité centrale (5) :
* commandant la vanne de blocage (80) dans un état de blocage lorsque le système de simulation est actionné,
* mettant en service le système de freinage hydraulique (7, 8) si le système de freinage électrique (9) est insuffisant pour répondre à la demande de freinage et commander la fermeture partielle ou totale de la vanne de simulation,
- le détecteur (6) de consigne de freinage assure la commande de la vanne de simulation (3) en fonction de la consigne de freinage (Dec) détectée par le détecteur (5) et du freinage à effectuer par le système hydraulique de freinage (7, 8).

2. Système de simulation de sensation de freinage selon la revendication 1, **caractérisé en ce que** l'unité de commande centrale (5) réalise une commande numérique de la vanne de simulation (3) selon un taux de modulation correspondant à la commande de freinage du système de freinage auxiliaire.

3. Système de simulation de sensation de freinage selon la revendication 1, **caractérisé en ce que** la première chambre (20) contient un piston de commande (23) du système de freinage hydraulique (7) commandé par énergie musculaire, le fluide de transmission d'effort (21) étant dans la chambre (20) entre le piston de commande (23) du système de freinage hydraulique et le piston hydraulique (22) commandé par l'organe de commande (1) et **en ce que** le piston de commande (23) porte la tige de commande (70) d'un servomoteur d'assistance au freinage (71) et/ou d'un maître cylindre (72).

4. Système de simulation de sensation de freinage selon la revendication 3, **caractérisé en ce que** la deuxième chambre secondaire de simulation (4) comporte une enceinte (40) qui communique par la vanne de simulation (3) avec la première chambre (20) et qui contient le même type de fluide que cette première chambre, un piston (42) poussé par un dispositif élastique (43) fermant ladite deuxième chambre sans opposer quasiment d'effort au déplacement du fluide de la première chambre (20) vers la deuxième chambre (40).

5. Système de simulation de sensation de freinage selon la revendication 4, **caractérisé en ce qu'**il comporte, un détecteur (6) de déplacement de l'organe de commande de freinage manuel (1) fournissant un signal de détection de déplacement (Dec) qui est transmis à l'unité centrale de commande, laquelle commande l'ouverture et/ou la fermeture de la vanne de simulation (3).

6. Application du système de simulation de sensation de freinage selon la revendication 5, à un véhicule à traction mixte moteurs électriques et moteur à combustion interne, **caractérisé en ce que** le circuit hydraulique de freinage de chaque roue utilisée pour le freinage du véhicule est équipé d'une vanne de blocage (80) du circuit hydraulique.

## Patentansprüche

1. System zur Simulierung des Bremsgefühls für eine Fahrzeugbremsanlage, beinhaltend ein hydraulisches Bremssystem (7, 8), das durch Muskelkraft des Fahrers gesteuert wird, und ein regeneratives elektrisches Hilfsbremssystem (9), wobei das Simulierungssystem ein Ventil (80) zum Absperren des Betriebs des hydraulischen Bremskreises (7, 8), eine zentrale Einheit (5), die das Absperrventil steuert, und einen Bremssollwertsensor (6), der mit der zentralen Einheit (5) verbunden ist, beinhaltet,
**dadurch gekennzeichnet, dass** es Folgendes beinhaltet:
- eine erste Kammer (20), die ein Fluid (21) zur Übertragung von Kraft zwischen einem Hydraulikkolben (22), der von einem manuellen Bremssteuerelement (1) angetrieben wird, und einem Steuerkolben (23) des hydraulischen Bremssystems (7, 8) enthält,
- wobei die erste Kammer (20), bei entsprechender Steuerung, über ein Simulierungsventil (3), dessen Öffnungsgrad das Simulieren einer Kraft auf das Bremspedal ermöglicht, mit einer zweiten Simulierungskammer (4) in Verbindung steht,
- wobei die zentrale Einheit (5):
* das Absperrventil (80) in einen Absperrzustand steuert, wenn das Simulierungssystem betätigt wird,
* das hydraulische Bremssystem (7, 8) in Betrieb setzt, wenn das elektrische Bremssystem (9) nicht ausreichend ist, um auf die Bremsanforderung zu reagieren, und das teilweise oder vollständige Schließen des Simulierungsventils steuert,
- wobei der Bremssollwertsensor (6) die Steuerung des Simulierungsventils (3) in Abhängigkeit von dem Bremssollwert (Dec), der von dem Sensor (5) erfasst wird, und von der durch das hydraulische Bremssystem (7, 8) auszuführenden Bremsung sicherstellt.

2. System zur Simulierung des Bremsgefühls nach Anspruch 1, **dadurch gekennzeichnet, dass** die zentrale Steuereinheit (5) gemäß einem Modulationsgrad, der der Bremssteuerung des Hilfsbremssystems entspricht, eine digitale Steuerung des Simulierungsventils (3) durchführt.

3. System zur Simulierung des Bremsgefühls nach Anspruch 1, **dadurch gekennzeichnet, dass** die erste Kammer (20) einen Steuerkolben (23) des hydraulischen Bremssystems (7) enthält, der durch Muskelkraft gesteuert wird, wobei sich das Kraftübertragungsfluid (21) in der Kammer (20) zwischen dem Steuerkolben (23) des hydraulischen Bremssystems und dem durch das Steuerelement (1) gesteuerten Hydraulikkolben (22) befindet, und dass der Steuerkolben (23) die Steuerstange (70) eines Bremsunterstützungsservomotors (71) und/oder eines Hauptzylinders (72) trägt.

4. System zur Simulierung des Bremsgefühls nach Anspruch 3, **dadurch gekennzeichnet, dass** die zweite sekundäre Simulierungskammer (4) einen Raum (40) beinhaltet, der über das Simulierungsventil (3) mit der ersten Kammer (20) in Verbindung steht und der denselben Fluidtyp wie die erste Kammer enthält, wobei ein durch eine elastische Vorrichtung (43) geschobener Kolben (42) die zweite Kammer schließt und dabei der Bewegung des Fluids von der ersten Kammer (20) in die zweite Kammer (40) fast keine Kraft entgegensetzt.

5. System zur Simulierung des Bremsgefühls nach Anspruch 4, **dadurch gekennzeichnet, dass** es einen Bewegungssensor (6) für das manuelle Bremssteuerelement (1) beinhaltet, der ein Bewegungserfassungssignal (Dec) liefert, das an die zentrale Steuereinheit übertragen wird, welche das Öffnen und/oder Schließen des Simulierungsventils (3) steuert.

6. Anwendung des Systems zur Simulierung des Bremsgefühls nach Anspruch 5 in einem Fahrzeug mit Mischantrieb aus Elektromotoren und Verbrennungsmotor, **dadurch gekennzeichnet, dass** der hydraulische Bremskreis jedes Rads, das für das Bremsen des Fahrzeugs verwendet wird, mit einem Absperrventil (80) für den Hydraulikkreis ausgerüstet ist.

## Claims

1. Brake feel simulation system for a vehicle braking installation comprising a hydraulic braking system (7, 8) controlled by the muscle power of the driver and an electrical energy recovery auxiliary braking system (9), the simulation system comprising a blocking valve (80) that blocks the operation of the hydraulic braking circuit (7, 8), a sensor unit (5) controlling the blocking valve and a braking requirement detector (6) connected to the sensor unit (5),
**characterized in that** it comprises
- a first chamber (20) containing a transmission fluid (21) transmitting force between a hydraulic piston (22) driven by a manual brake control member (1) and a control piston (23) of the hydraulic braking system (7, 8),
- the first chamber (20) communicating on command with a second, simulation, chamber (4) via a simulation valve (3) the degree of opening of which makes it possible to simulate a force at the brake pedal, and
- the sensor unit (5):
* commanding the blocking valve (80) into a blocking state when the simulation system is actuated,
* bringing the hydraulic braking system (7, 8) into service if the electric braking system (9) is insufficient to meet the braking demand and commanding partial or full closure of the simulation valve,
- the braking requirement detector (6) operates the simulation valve (3) according to the braking requirement (Dec) detected by the detector (5) and according to the braking to be performed by the hydraulic braking system (7, 8).

2. Brake feel simulation system according to Claim 1, **characterized in that** the central control unit (5) digitally controls the simulation valve (3) with a depth of modulation that corresponds to the braking control of the auxiliary braking system.

3. Brake feel simulation system according to Claim 1, **characterized in that** the first chamber (20) contains a control piston (23) controlling the hydraulic braking system (7), controlled by muscle power, the force transmission fluid (21) being in the chamber (20) between the control piston (23) of the hydraulic braking system and the hydraulic piston (22) controlled by the control member (1), and **in that** the control piston (23) bears the control rod (70) of a brake booster (71) and/or of a master cylinder (72).

4. Brake feel simulation system according to Claim 3, **characterized in that** the second, secondary simulation chamber (4), comprises a space (40) which communicates via the simulation valve (3) with the first chamber (20) and which contains the same type of fluid as this first type of chamber, a piston (42) pushed by an elastic device (43) closing the said second chamber almost without offering any resistance to the movement of the fluid from the first chamber (20) towards the second chamber (40).

5. Brake feel simulation system according to Claim 4, **characterized in that** it comprises a detector (6) of the movement of the manual brake control member (1) supplying a movement detection signal (Dec) which is transmitted to the central control unit, which latter commands the opening and/or the closing of the simulation valve (3).

6. Application of the brake feel simulation system according to Claim 5 to a mixed-drive vehicle having electric motors and internal combustion engine, **characterized in that** the hydraulic braking circuit for each wheel used for braking the vehicle is fitted with a blocking valve (80) for blocking the hydraulic circuit.
